# EUROPÄISCHE PATENTSCHRIFT

(11) **EP 1 382 554 B1**
(45) Veröffentlichungstag und Bekanntmachung des Hinweises auf die Patenterteilung: **26.01.2005**
(21) Anmeldenummer: 03013105.6
(22) Anmeldetag: 11.06.2003
(51) Int. Cl.: B65G 53/52

(54) **Vorrichtung zum pneumatischen oder hydraulischen Fördern von Schüttgut**
Pneumatic or hydraulic conveying installation for transporting bulk materials
Installation de transport pneumatique ou hydraulique de matériaux en vrac

(30) Priorität: 17.07.2002 DE 10232231
(43) Veröffentlichungstag der Anmeldung: 21.01.2004
(73) Patentinhaber: Möller Materials Handling GmbH, D-25421 Pinneberg (DE)
(72) Erfinder: Duwe, Carsten, Dipl.-Ing., 22529 Hamburg (DE); Von Geldern, Klaus, Dipl.-Ing., 21037 Hamburg (DE)
(74) Vertreter: Patentanwälte Hauck, Graalfs, Wehnert, Döring, Siemons, Schildberg

(56) Entgegenhaltungen:
- WO-A-85/01276
- CH-A- 685 697
- DE-A- 2 102 301
- DE-C- 3 711 122
- DE-U- 20 211 770

## Beschreibung

Die Erfindung bezieht sich auf eine Vorrichtung zum pneumatischen oder hydraulischen Fördern von staubförmigem, pulverförmigem oder körnigem Schüttgut nach dem Patentanspruch 1.

Aus DE 15 06 848 ist bekannt geworden, parallel zu einer Hauptförderleitung eine Nebenleitung anzuordnen. Die Nebenleitung weist Ein- und Austrittsöffnungen auf, welche im Abstand zueinander angeordnet sind. Zwischen den Ein- und Austrittsöffnungen befindet sich eine Absperrung der Nebenleitung, sodass das Fördermedium der Nebenleitung in Abständen in die Hauptförderleitung und aus dieser wieder heraus in die Nebenleitung eingeleitet wird.

Aus DE 21 02 301 ist bekannt, eine Nebenleitung innerhalb der Hauptförderleitung anzuordnen. In der Nebenleitung sind Austrittsöffnungen durch eine aus dem Zeichnungsmaterial geformte erste Zunge gebildet, welche bodenseitig schräg gegen den Förderstrom gerichtet in die Nebenleitung hinein steht. In Strömungsrichtung dahinter ist aus dem Leitungsmaterial eine zweite Zunge in der gleichen Richtung für die Ausbildung einer Wiedereintrittsöffnung geformt. Auch bei dieser Konstruktion wird ebenso wie bei der voranstehend beschriebenen beabsichtigt, bei Ausbildung von festsitzenden Gutpfropfen in der Förderleitung über die Zuführung von Förderluft aus der Nebenleitung ein Aufspalten zu erreichen.

Aus EP 0 160 661 ist ferner bekannt geworden, in dem als Nebenleitung dienenden Innenrohr zwischen einer Auslass- und einer Einlassöffnung eine senkrecht stehende Scheibe anzuordnen, die mit mindestens einer Öffnung versehen ist. Die Öffnung kann von einem kreisrunden Loch oder auch einem Schlitz gebildet sein. Mit Hilfe dieser Maßnahme soll erreicht werden, dass das Schüttgut in der Förderleitung fortlaufend so stark verwirbelt wird, dass von vornherein sich keine festsitzenden Gutspfropfen bilden. Selbst wenn es hierzu kommt, wird durch das Fördermedium (z.B. Luft) aus dem Innenrohr das Auflösen des Gutspfropfens bewirkt.

Der Erfindung liegt die Aufgabe zugrunde, eine Vorrichtung zum pneumatischen oder hydraulischen Fördern von staubförmigem, pulverförmigem oder körnigem Schüttgut zu schaffen, bei dem bei Aufrechterhaltung der Förderfunktion der Einsatz an Energie reduziert wird.

Diese Aufgabe wird durch die Merkmale des Patentanspruchs 1 gelöst.

Bei der erfindungsgemäßen Vorrichtung haben die Scheiben in dem an der Innenseite des Innenrohres anliegenden Bereich Ellipsenform und ihre aufströmseitige Fläche ist schräg zur Strömungsrichtung ausgebildet derart, dass der auftreffende Förderstrom zur Austrittsöffnung hin abgelenkt wird.

Nach einer Ausgestaltung der Erfindungerstrecken sich die aufströmseitigen Flächen bzw. die Scheiben bis zum annähernd tiefsten Punkt der Öffnungen. Alternativ können die Scheiben deutlich kürzer sein und sich unter Umständen bis zur Achse des Innenrohrs erstrecken oder noch kürzer sein.

Nach einer Ausgestaltung der Erfindung können die Scheiben mindestens eine Öffnung aufweisen, die zum Beispiel als kreisrundes Loch oder als Schlitz gebildet ist, wie dies jedoch bereits aus EP 10 160 661 bekannt geworden ist.

Auch in der erfindungsgemäßen Konstruktion ist vorzugsweise eine einzige durchgehende Öffnung im Innenrohr gebildet, welche durch die Scheibe in eine Austrittsund eine Eintrittsöffnung unterteilt ist. Die Austrittsöffnung kann kleiner, gleich oder größer als die Eintrittsöffnung ausgebildet sein.

Nach einer anderen Ausgestaltung der Erfindung ist im Bereich der Scheiben ein winkliger Einschnitt in das Innenrohr geformt, wodurch eine Austritts- und Eintrittsöffnung gebildet sind. Eine derartige Ausgestaltung einer Öffnung in der Innenrohrwandung ist ebenfalls aus EP 0 160 661 bekannt. Erfindungsgemäß liegt der Scheitel des Einschnittwinkels im Bereich der Scheibe. Nach einer anderen Ausgestaltung der Erfindung kann der Scheitel des Einschnittwinkels auch im Abstand zur abströmseitigen Fläche annähernd auf der Achse des Innenrohrs liegen.

Die Winkel der Schenkel des Einschnittswinkels zu den Enden der Schenkel verbindenden Dreiecksseite bzw. Hypotenuse können ebenfalls in geeigneter Weise gewählt werden. Sie sind vorzugsweise oder auch zwangsläufig kleiner als 90°.

Das Innenrohr liegt nach einer anderen Ausgestaltung der Erfindung an der Innenwand der Förderleitung an. Auch diese Ausgestaltung ist aus EP 0 160 661 bekannt. Nach einer anderen Ausgestaltung der Erfindung hat das Innenrohr einen Abstand zur Wandung der Förderleitung. Dadurch wird zwar der für das Schüttgut zur Verfügung stehende Förderquerschnitt etwas reduziert, andererseits werden dadurch Strömungsbedingungen erhalten, die ein Verstopfen bzw. die Bildung von Gutspfropfen verhindern.

Die Scheiben werden in geeigneter Weise im Innenrohr angebracht, beispielsweise durch Verschweißen. Nach einer Ausgestaltung der Erfindung kann die Scheibe von einer kompletten Ellipse gebildet sein oder auch von einem Ellipsensegment. Die Ellipsenform ist im an der Rohrwandung anliegenden Bereich bei einer Schrägstellung der Scheibe in einem kreisrunden Innenrohr dann obligatorisch, wenn beabsichtigt ist, dass zwischen Scheibe und Wandung des Innenrohrs kein Spalt vorhanden sein soll. An der Unterkante kann die Scheibe anderweitig gestaltet sein, z.B. eine gerade Kante vorgesehen werden oder ein Einschnitt von begrenzter Breite, der von der Unterkante aus vorgesehen ist.

Bei der erfindungsgemäßen Ausbildung einer Fördervorrichtung wird eine relativ sanfte Umlenkung des Förderstroms erzielt, wodurch weniger Turbulenzen verursacht werden. Andererseits ist durch den Strömungswiderstand der Scheiben die in die Förderleitung rückströmbare Menge maximiert. Insgesamt ist eine Konstruktion erhalten, welche bei mindestens gleicher Förderleistung gegenüber herkömmlichen Fördervorrichtungen und ungestörtem Förderbetrieb einen reduzierten Energieeinsatz erfordert. Da der Energieeinsatz bei derartigen Fördervorrichtungen erheblich ist, kommt es zu einer erheblichen Einsparung.

Nachfolgend werden in Zeichnungen dargestellte Ausführungsbeispiele näher erläutert.
- Fig. 1: zeigt einen Quer- und einen Längsschnitt durch einen Teil einer Förderleitung nach der Erfindung.
- Fig. 2: zeigt einen Quer- und einen Längsschnitt durch eine zweite Ausführungsform einer Förderleitung nach der Erfindung.
- Fig. 3: zeigt einen Quer- und einen Längsschnitt durch eine dritte Ausführungsform einer Förderleitung nach der Erfindung.
- Fig. 4: zeigt einen Quer- und einen Längsschnitt durch eine vierte Ausführungsform einer Förderleitung nach der Erfindung.
- Fig. 5: zeigt einen Quer- und einen Längsschnitt durch eine fünfte Ausführungsform einer Förderleitung nach der Erfindung.
- Fig. 6: zeigt einen Quer- und einen Längsschnitt durch eine sechste Ausführungsform einer Förderleitung nach der Erfindung.

In den Figuren sind zum Teil gleiche Einzelheiten dargestellt. Sie werden daher mit gleichen Bezugszeichen versehen.

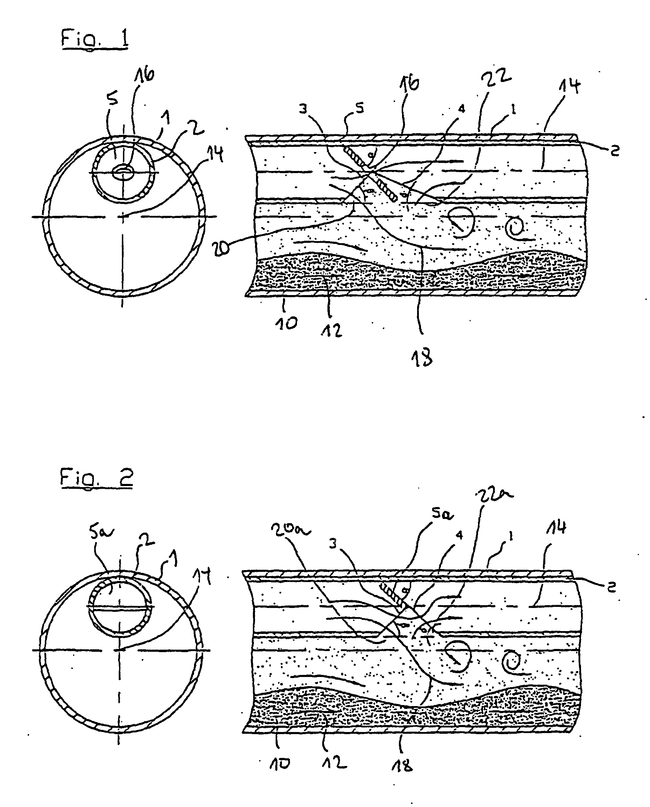

In Fig. 1 ist eine Förderleitung 1 von kreisförmigem Querschnitt zu erkennen, wie sie üblicherweise bei pneumatischen oder hydraulischen Fördervorrichtungen eingesetzt wird. Das zu fördernde Gut ist bei 10 dargestellt. Es wird durch einen Förderstrom in Richtung der Pfeile 12 vorbewegt, wobei ein Teil des Förderquerschnitts vom Schüttgut frei bleibt, allenfalls befinden sich schwebende Partikel oberhalb des eigentlichen auf dem Boden der Förderleitung 1 vorbewegten Schüttguts 10. Bei der Querschnittsdarstellung in Fig. 1 ist das Schüttgut nicht gezeigt.

Ein Innenrohr 2 von kreisförmigem Querschnitt, jedoch deutlich geringerem Durchmesser liegt an der Oberseite der Innenwandung der Förderleitung 1 an. Das Innenrohr 2 wird in gleicher Weise mit dem Fördermedium beaufschlagt wie die Förderleitung 1. Das Innenrohr 2 hat in Abständen winkelförmige Einschnitte, von denen einer in Fig. 1 dargestellt ist. Die Einschnitte bilden Schenkel 3 und 4 eines Einschnittswinkels, dessen Scheitel auf der Achse des Innenrohrs 2 liegt.

Im Innenrohr 2 ist ein Strömungswiderstand in Form einer elliptischen Scheibe 5 dargestellt, die eine mittige Öffnung 16 von kreisförmigem Umfang aufweist. Der Querschnitt kann jedoch auch elliptisch sein. Wie erkennbar, liegt der Scheitel der Schenkel 3, 4 in der Mitte der Scheibe 5. Die Scheibe 5 hat eine aufströmseitige und eine abströmseitige Fläche. Die aufströmseitige Fläche und insgesamt die Scheibe 5 sind zur Achse des Innenrohrs 14 derart geneigt, dass die Strömung schräg nach unten in Richtung der Öffnung des Einschnitts abgelenkt wird, wie durch den geschwungenen Pfeil 18 dargestellt. Durch die Scheibe 5 und den Einschnitt wird mithin eine Austrittsöffnung 20 und eine Eintrittsöffnung 22 für das Fördermedium gebildet.

Der Winkel β, der zwischen dem Schenkel 3 und der die Schenkel 3, 4 verbindenden Dreiecksseite bzw. Hypotenuse gebildet ist, ist kleiner als 90° und etwas größer als der Winkel δ, der zwischen dem Schenkel 4 und der Dreiecksseite bzw. Hypotenuse gebildet ist. Da außerdem der untere Rand der Scheibe 5 die genannte Hypotenuse in einen größeren und einen kleineren Abschnitt unterteilt, ist mithin die Austrittsöffnung 20 größer als die Eintrittsöffnung 22.

Nur im Fall einer Verstopfung ergibt sich ein mehr oder weniger starkes Rückströmen des aus dem Innenrohr 2 in die Hauptförderleitung eintretenden Fördermediums, während im Normalbetrieb ohne Verstopfungen der größte Teil in der Hauptförderleitung weiterströmt. Da die Umlenkung dieses Förderstroms in die Hauptförderleitung relativ sanft vonstatten geht und auch ein recht großer Strömungsquerschnitt zwischen Innenrohr 2 und dem Inneren der Hauptförderleitung 1 vorhanden ist, ist daher der Strömungswiderstand im Normalbetrieb in diesem Bereich relativ gering. Andererseits kann eine relativ große Fördermediummenge aus dem Innenrohr in die Förderleitung in dem Bereich einer möglichen Verstopfung austreten, um hier wirksam einen Pfropfen aufzulösen.

Bei der Ausführungsform nach Fig. 2 ist ein elliptisches Segment 5a als Strömungswiderstand vorgesehen, das ebenso wie die Scheibe 5 in Fig. 1 mit einem Winkel α gegenüber der Achse 14 geneigt ist. Die Besonderheit liegt darin, dass das Segment 5a sich nur bis kurz unterhalb der Achse 14 erstreckt. Die Schenkel des Einschnitts 3, 4 bilden einen rechten Winkel, wodurch die Winkel β und δ gleich sind. Das untere Ende liegt auf der halben Länge der Hypotenuse. Dadurch werden für Eintritts- und Austrittsöffnung 20a, 22a gleiche Querschnitte erhalten.

Bei der Ausführungsform nach Fig. 3 ist statt einer Scheibe 5 gemäß Fig. 1 mit Öffnung 16 eine geschlossene Scheibe 5b vorgesehen. Während sich die Scheibe 5 nach Fig. 1 bis annähernd zur unteren Außenseite des Innenrohrs 2 erstreckt, endet die geschlossene Scheibe 5b oberhalb der Innenwandung des Innenrohrs 2. Die Neigung α entspricht wiederum der der Scheiben 5 und 5a der vorstehenden Figuren.

Der Einschnitt mit den Schenkeln 3 und 4 ergibt einen Scheitel, der zwar auf der Achse 14 des Innenrohrs 12 liegen kann, jedoch gegenüber der Scheibe 5b abströmseitig im Abstand angeordnet ist. Dadurch ergibt sich ein relativ kleiner Winkel α und ein etwas größerer Winkel δ. Der Durchströmquerschnitt für die Austrittsöffnung 20b ist damit besonders groß.

Es sei noch angemerkt, dass der Umriss der Scheibe 5b innerhalb des Innenrohrs elliptisch ist, außerhalb aber durchaus jede andere Form eines Turbulenzerzeugers annehmen kann.

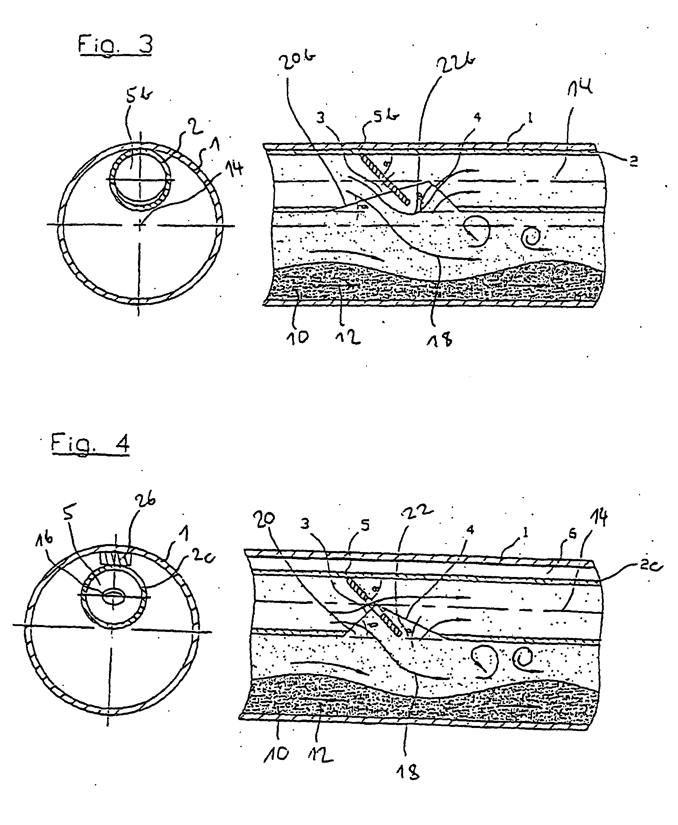

Die Ausführungsform nach Fig. 4 unterscheidet sich von derjenigen nach Fig. 1 dadurch, dass das Innenrohr 2c einen Abstand 6 zur Innenwandung der Förderleitung 1 aufweist. Bei 26 ist in Fig. 4 ein Abstandsstück vorgesehen, das in Abständen zwischen Förderleitung 1 und Innenrohr 2c angeordnet ist.

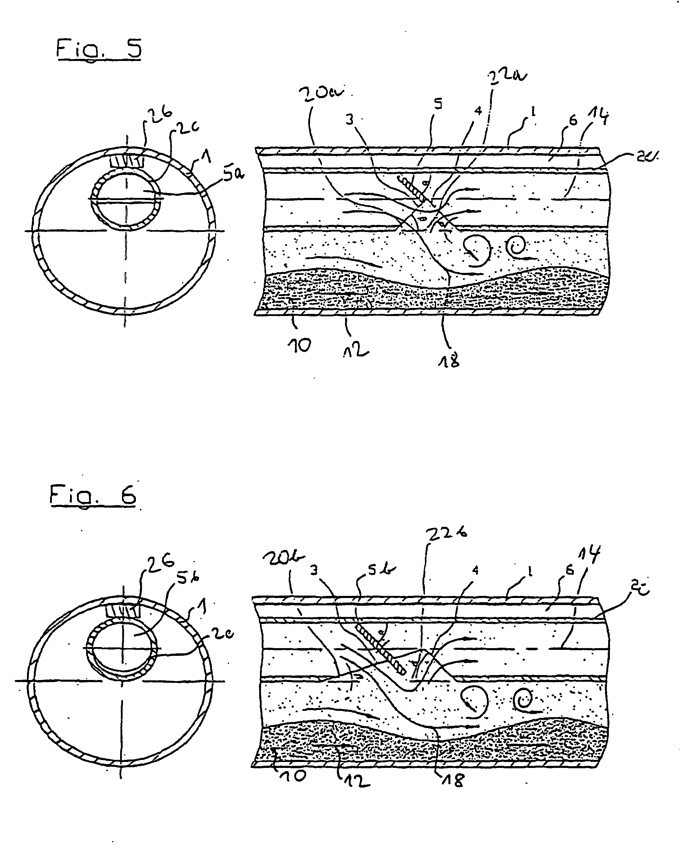

Die Ausführungsform nach Fig. 5 gleicht der nach Fig. 2, wobei wiederum zwischen Innenrohr 2c und Förderleitung 1 ein Abstand 6 vorgesehen ist.

Die Ausführungsform nach Fig. 6 unterscheidet sich von der nach Fig. 3 dadurch, dass zwischen Innenrohr 2c und Förderleitung 1 ein Abstand 6 vorgesehen ist.

## Patentansprüche

1. Vorrichtung zum pneumatischen oder hydraulischen Fördern von staubförmigem, pulverförmigem oder körnigem Schüttgut, mit einer Förderleitung, einem achsparallelen, vorzugsweise außermittigen Innenrohr von kreisförmigem Querschnitt in der Förderleitung, das in Abständen Öffnungen aufweist und Strömungswiderständen im Innenrohr in Form von Scheiben im Bereich der Öffnungen, die außerhalb der Öffnungen an der Innenwandung des Innenrohrs anliegen und eine aufströmseitige und eine abströmseitige Fläche aufweisen, wodurch Austrittsöffnungen in die Förderleitung hinein und Eintrittsöffnungen in das Innenrohr hinein für das Fördermedium gebildet sind, **dadurch gekennzeichnet, dass** die Scheiben (5, 5a, 5b) in dem an der Innenwandung anliegenden Bereich Ellipsenform aufweisen und die aufströmseitige Fläche mit der Achse (14) des Innenrohrs (2) einen Winkel (α) <90° bildet und den auftreffenden Förderstrom zu den Austrittsöffnungen (20, 20a, 20b) hin umlenkt.

2. Vorrichtung nach Anspruch 1, **dadurch gekennzeichnet, dass** die aufströmseitigen Flächen bzw. die Scheiben (5, 5b) sich bis zum annähernd tiefsten Punkt der Öffnungen erstrecken, oder in die Förderleitung hineinragt.

3. Vorrichtung nach Anspruch 2, **dadurch gekennzeichnet, dass** die Scheiben (5) eine vorzugsweise kreisrunde oder schlitzförmige Öffnung (16) aufweisen.

4. Vorrichtung nach Anspruch 3, **dadurch gekennzeichnet, dass** vorzugsweise die Öffnung (16) im Bereich der Achse (14) liegt.

5. Vorrichtung nach Anspruch 1, **dadurch gekennzeichnet, dass** die aufströmseitigen Flächen bzw. die Scheiben (5, 5a) oberhalb des Tiefstpunktes der zugeordneten Öffnungen enden.

6. Vorrichtung nach Anspruch 5, **dadurch gekennzeichnet, dass** die aufströmseitigen Flächen bzw. die Scheiben (5, 5a) in Höhe oder auch unterhalb der Achse (14) des Innenrohrs (2, 2c) enden.

7. Vorrichtung nach einem der Ansprüche 1 bis 6, **dadurch gekennzeichnet, dass** die Austrittsöffnung (20, 20a, 20b) kleiner, gleich oder größer als die Eintrittsöffnung (22, 22a, 22b) ist.

8. Vorrichtung nach einem der Ansprüche 1 bis 7, **dadurch gekennzeichnet, dass** im Bereich der Scheiben (5, 5a, 5b) ein winkliger Einschnitt in das Innenrohr (2, 2b, 2c) geformt ist, wodurch eine Austritts- und eine Eintrittsöffnung (20, 22, 20a, 22a, 20b, 22b) gebildet ist.

9. Vorrichtung nach Anspruch 8, **dadurch gekennzeichnet, dass** sich der Einschnitt ober- oder unterhalb der Achse (14) des Innenrohrs (2) erstreckt.

10. Vorrichtung nach Anspruch 8 oder 9, **dadurch gekennzeichnet, dass** der Scheitel des Einschnittwinkels im Bereich der Scheiben (5, 5a) liegt.

11. Vorrichtung nach Anspruch 8 oder 9, **dadurch gekennzeichnet, dass** der Scheitel des Einschnittwinkels im Abstand zur abströmseitigen Fläche auf der Achse (14) des Innenrohrs (2) liegt.

12. Vorrichtung nach einem der Ansprüche 8 bis 11, **dadurch gekennzeichnet, dass** der aufströmseitige Schenkel (3) des Einschnittwinkels mit der die Schenkelenden verbindenden Dreiecksseite bzw. Hypotenuse einen Winkel (β) <90° bildet.

13. Vorrichtung nach Anspruch 12, **dadurch gekennzeichnet, dass** der Winkel (β) kleiner, gleich oder größer ist als der Winkel (δ), der den abströmseitigen Schenkel (4) des Einschnittwinkels und die die Schenkel (3, 4) verbindende Dreiecksseite oder Hypotenuse bildet.

14. Vorrichtung nach einem der Ansprüche 1 bis 13, **dadurch gekennzeichnet, dass** das Innenrohr (2) an der Innenwand der Förderleitung (1) anliegt.

15. Vorrichtung nach einem der Ansprüche 1 bis 13, **dadurch gekennzeichnet, dass** das Innenrohr (2c) zur Innenwand der Förderleitung (1) einen Abstand aufweist.

16. Vorrichtung nach einem der Ansprüche 1 bis 15, **dadurch gekennzeichnet, dass** die Scheibe (5, 5b) Ellipsenform hat.

17. Vorrichtung nach einem der Ansprüche 1 bis 15, **dadurch gekennzeichnet, dass** die Scheibe (5a) von einem Ellipsensegment gebildet ist.

## Claims

1. Installation for the pneumatic or hydraulic conveyance of dust-like, power-like, or granular bulk materials, with a conveyor line, an axially parallel, preferably off-centered inner tube with a circular cross section in the conveyor line, which has intermittent openings and flow resistances in the inner tube in the form of disks in the area of the opening, which lie outside the openings on the inner wall of the inner tube and have an up-stream- and a down-stream-side surface, whereby outflow openings into the conveyor line and inflow openings into the inner tube for the conveyor medium are formed, **characterized in that** the disks (5, 5a, 5b) have an elliptical shape in the area adjacent to the inner wall and the up-stream-side surface forms an angle (α) <90° with the axis (14) of the inner tube (2) and diverts the striking conveyor flow to the outflow openings (20, 20a, 20b).

2. Installation in accordance with claim 1, **characterized in that** the up-stream-side surfaces or the disks (5, 5b) almost extent up to the deepest point of the openings or rise up into the conveyor line.

3. Installation in accordance with claim 2, **characterized in that** the disks (5) have a preferably circular or slit-like opening (16).

4. Installation in accordance with claim 3, **characterized in that** the opening (16) preferably lies in the area of the axis (14).

5. Installation in accordance with claim 1, **characterized in that** the up-stream-side surfaces or the disks (5, 5a) end above of the trough of the associated openings.

6. Installation in accordance with claim 5, **characterized in that** the up-stream-side surfaces or the disks (5, 5a) end at the same height as or even below the axis (14) of the inner tube (2, 2c).

7. Installation in accordance with one of claims 1 through 6, **characterized in that** the outflow opening (20, 20a, 20b) is smaller, the same size as, or larger than the inflow opening (22, 22a, 22b).

8. Installation in accordance with one of claims 1 through 7, **characterized in that** in the area of the disks (5, 5a, 5b) an angular notch is formed in the inner tube (2, 2b, 2c), whereby an outflow or an inflow opening (20, 22, 20a, 22a, 20b, 22b) is formed.

9. Installation in accordance with claim 8, **characterized in that** the notch extends above or below the axis (14) of the inner tube (2).

10. Installation in accordance with claim 8 or 9, **characterized in that** the apex of the notch angle lies in the area of the disks (5, 5a).

11. Installation in accordance with claim 8 or 9, **characterized in that** the apex of the notch angle lies at a distance from the down-stream-side surface of the axis (14) of the inner tube (2).

12. Installation in accordance with one of claims 8 through 11, **characterized in that** the up-stream-side leg (3) of the notch angle with the triangle side or hypotenuse connecting the leg ends forms an angle (β) <90°.

13. Installation in accordance with claim 12, **characterized in that** the angle (β) is smaller, the same size as, or larger than the angle (δ), which forms the down-stream-side leg (4) of the notch angle and the triangle side or hypotenuse connecting the legs (3, 4).

14. Installation in accordance with claims 1 through 13, **characterized in that** the inner tube (2) lies adjacent to the inner wall of the conveyor line (1).

15. Installation in accordance with claims 1 through 13, **characterized in that** the inner tube (2c) is located at a distance from the inner wall of the conveyor line (1).

16. Installation in accordance with claims 1 through 15, **characterized in that** the disk (5, 5b) has an elliptical shape.

17. Installation in accordance with claims 1 through 15, **characterized in that** the disk (5a) is made of an elliptical segment.

## Revendications

1. Installation de transport pneumatique ou hydraulique de matériaux en vrac sous forme pulvérulente, poudreuse ou granulaire, comportant une conduite de transport, un tube intérieur de section circulaire dont l'axe est parallèle à celui de la conduite principale et préférablement excentré par rapport à celle-ci, le tube intérieur comportant des ouvertures espacées et des résistances à l'écoulement sous forme de disques à hauteur des ouvertures, ces disques étant disposés hors desdites ouvertures, contre la paroi interne du tube intérieur, et présentant une face amont et une face aval, de telle façon que des orifices de sortie vers la conduite de transport et des orifices d'entrée dans le tube intérieur sont constitués pour le milieu de transport, **caractérisée en ce que** les disques (5, 5a, 5b) sont de forme elliptique dans leur partie adjacente à la paroi interne, les faces amont desdits disques formant un angle (α) < 90° avec l'axe (14) du tube intérieur (2) et déviant le flux de transport incident vers les orifices de sortie (20, 20a, 20b).

2. Installation selon la revendication 1, **caractérisée en ce que** les faces amont des disques (5, 5b) s'étendent pratiquement jusqu'au point le plus bas des ouvertures ou s'avancent dans la conduite de transport.

3. Installation selon la revendication 2, **caractérisée en ce que** les disques (5) présentent une ouverture (16) préférablement circulaire ou en forme de fente.

4. Installation selon la revendication 3, **caractérisé en ce que** l'ouverture (16) est disposée préférablement à proximité de l'axe (14).

5. Installation selon la revendication 1, **caractérisée en ce que** les faces amont des disques (5, 5a) s'étendent au-delà du point le plus bas des ouvertures pratiquées.

6. Installation selon la revendication 5, **caractérisée en ce que** les faces amont des disques (5, 5a) s'étendent jusqu'à l'axe (14) du tube intérieur (2, 2c) ou au-delà.

7. Installation selon les revendications 1 à 6, **caractérisée en ce que** l'orifice de sortie (20, 20a, 20b) est plus petit, égal ou plus grand que l'orifice d'entrée (22, 22a, 22b).

8. Installation selon les revendications 1 à 7, **caractérisée en ce qu'**une découpe en coin est constituée dans le tube intérieur (2, 2b, 2c) à proximité des disques (5, 5a, 5b), constituant ainsi un orifice de sortie et un orifice d'entrée (20, 22, 20a, 22a, 20b, 22b).

9. Installation selon la revendication 8, **caractérisée en ce que** la découpe s'étend au-dessus ou en dessous de l'axe (14) du tube intérieur (2).

10. Installation selon les revendications 8 ou 9, **caractérisée en ce que** le sommet du coin de découpe se trouve à proximité du disque (5, 5a).

11. Installation selon les revendications 8 ou 9, **caractérisée en ce que** le sommet du coin de découpe est espacé de la face amont le long de l'axe (14) du tube intérieur (2).

12. Installation selon les revendications 8 à 11, **caractérisée en ce que** le côté amont (3) de la découpe en coin forme avec la ligne rejoignant les extrémités des côtés de la découpe, soit l'hypothénuse, un angle (β) < 90°.

13. Installation selon la revendication 12, **caractérisée en ce que** l'angle (β) est plus petit, égal ou plus grand que l'angle (δ) formé par le côté aval (4) de la découpe en coin et la ligne rejoignant les extrémités des côtés de la découpe (3, 4), soit l'hypothénuse.

14. Installation selon les revendications 1 à 13, **caractérisée en ce que** le tube intérieur (2) est adjacent à la paroi interne de la conduite de transport (1).

15. Installation selon les revendications 1 à 13, **caractérisée en ce que** le tube intérieur (2c) est espacé de la paroi interne de la conduite de transport (1).

16. Installation selon les revendications 1 à 15, **caractérisée en ce que** le disque (5, 5b) possède une forme elliptique.

17. Installation selon les revendications 1 à 15, **caractérisée en ce que** le disque (5a) est constitué d'une portion d'ellipse.
